# EUROPÄISCHE PATENTSCHRIFT

(11) **EP 2 118 473 B1**
(45) Veröffentlichungstag und Bekanntmachung des Hinweises auf die Patenterteilung: **05.09.2018**
(21) Anmeldenummer: 08716315.0
(22) Anmeldetag: 06.03.2008
(51) Int. Cl.: F02D 31/00, F02D 41/22

(54) **VORRICHTUNG UND VERFAHREN ZUR STEUERUNG EINER BRENNKRAFTMASCHINE EINES KRAFTFAHRZEUGS**
DEVICE AND METHOD FOR CONTROLLING AN INTERNAL COMBUSTION ENGINE OF A MOTOR VEHICLE
DISPOSITIF ET PROCÉDÉ POUR CONTRÔLER UN MOTEUR À EXPLOSION D'UNE AUTOMOBILE

(30) Priorität: 10.03.2007 DE 102007011737
(43) Veröffentlichungstag der Anmeldung: 18.11.2009
(73) Patentinhaber: Bayerische Motoren Werke Aktiengesellschaft, 80809 München (DE)
(72) Erfinder: ALBRECHT, Marc, Dr., 80807 München (DE)
(86) Internationale Anmeldenummer: PCT/EP2008/001800
(87) Internationale Veröffentlichungsnummer: WO 2008/110297

(56) Entgegenhaltungen:
- EP-A- 0 562 511
- WO-A-99/64265
- DE-A1- 4 022 359

## Beschreibung

Die Erfindung betrifft eine Vorrichtung und ein Verfahren zur Steuerung einer Brennkraftmaschine eines Kraftfahrzeugs. Durch die erfindungsgemäße Vorrichtung und das erfindungsgemäße Verfahren wird in bestimmten Betriebssituationen die Drehzahl der Brennkraftmaschine begrenzt bzw. abgeregelt. Durch die gezielte Drehzahlreduzierung soll insbesondere Betriebssituationen vorgebeugt werden, die eine zu hohe thermische Belastung der Brennkraftmaschine bedeuten würden.

Für den thermischen Schutz von Brennkraftmaschinen sind bereits verschiedene Vorrichtungen und Verfahren bekannt.

Beispielsweise existieren in heutigen Fahrzeugen Temperaturanzeigen für die Motoröltemperatur oder die Kühlwassertemperatur, die es dem Fahrer erlauben, bei kritischen Motoröl- oder Kühlwassertemperaturen geeignete Gegenmaßnahmen zu ergreifen - beispielsweise das Kraftfahrzeug außer Betrieb zu nehmen oder ggf. unmittelbar in die Werkstatt zu bringen. Des Weiteren existieren aktive Maßnahmen um einer thermischen Überhitzung entgegen zu wirken dahingehend, dass insbesondere in Stillstandsphasen bei aktivierter Brennkraftmaschine elektrische Lüftereinheiten automatisch aktiviert werden. Diese Maßnahmen sind jedoch nicht ausreichend, um einen dauerhaften Betrieb der Brennkraftmaschine im Fahrzeugstillstand bzw. bei niedrigen Fahrzeuggeschwindigkeiten zu erlauben, wenn die Brennkraftmaschinendrehzahl über der Leerlaufdrehzahl liegt. Derartige Anzeige- und Warneinrichtungen sowie die bekannten aktiven Lüftermaßnahmen haben den Nachteil, dass hierdurch eine thermische Überhitzung der Brennkraftmaschine durch Missbrauch oder dergleichen nicht vermieden werden kann.

Ferner ist aus der DE 35 31 868 A1 eine Brennstoffzufuhr-Unterbrechungseinrichtung bekannt, die die Brennkraftmaschine vor zu hohen Drehzahlen schützen soll. Dies wird erreicht, indem die Brennkraftmaschinendrehzahl laufend überwacht wird und bei Erreichen einer vorbestimmten Grenzdrehzahl in einem sehr hohen Drehzahlbereich die Brennstoffzufuhr unterbrochen wird. Ferner wird unterschieden, ob die Brennkraftmaschine belastet oder unbelastet betrieben wird, wobei bei Vorliegen eines unbelasteten Betriebszustandes der vorbestimmte Grenzwert, bei dem eine Unterbrechung der Kraftstoffzufuhr erfolgen soll, allmählich reduziert wird.

Aus der DE 33 19 025 A1 sind ein Verfahren und eine Vorrichtung zur Begrenzung der Drehzahl von Brennkraftmaschinen bekannt, wobei bei Erreichen einer maximal zulässigen Grenzdrehzahl der Zündzeitpunkt zum Erreichen einer schnellen Drehzahlbegrenzung verstellt und gleichzeitig ein Eingriff in die Gemischbildung erfolgt, um hierdurch die einsetzende Überhitzung der Brennkraftmaschine zu verhindern. Ferner wird vorgeschlagen, bei Erreichen einer zweiten höheren Drehzahlgrenze die Kraftstoffzufuhr zu unterbrechen.

Weiter ist aus der WO 99/64265 ein Verfahren sowie eine Vorrichtung für Fahrtregler bekannt, bei dem eine wiederholte Berechnung eines integrierten Steuerfaktors in Abhängigkeit vom momentanen Unterschied zwischen eine Ist-Geschwindigkeitswert und einem Soll-Geschwindigkeitswert vorgenommen wird, wobei der eine Begrenzung des Steuerfaktors auf einen maximalen Wert erfolgt, der abhängig von der momentanen Drehzahl des Motors gewählt wird. In Abhängigkeit von dem berechneten Steuerfaktors wird ein Ausgangssignal zur Regelung des Fahrzeugmotors auf ein entsprechendes Fahrzeugdrehmoment erzeugt.

Schließlich ist aus der DE 40 22 359 A1 eine Anordnung zur Verhinderung der Überhitzung eines Fahrzeugmotors durch Verringerung der Motorausgangsleistung bekannt.

Der Erfindung liegt die Aufgabe zugrunde, eine Vorrichtung und Verfahren zur Steuerung einer Brennkraftmaschine anzugeben, wodurch die Vermeidung der thermischen Überlastung der Brennkraftmaschine weiter verbessert wird. Insbesondere soll auch Missbrauchssituationen, in denen eine thermische Überlastung der Brennkraftmaschine herbeigeführt werden soll bzw. herbeigeführt wird, wirksam entgegengewirkt werden.

Der Erfindung liegt die Erkenntnis zugrunde, dass in den aus dem Stand der Technik bekannten, vorstehend beschriebenen Vorrichtungen und Verfahren relativ hohe Drehzahlen dauerhaft zugelassen werden ohne dass hier durch geeignete Gegenmaßnahmen gegengesteuert wird. In allen Fällen werden Drehzahlen knapp unterhalb der hohen Grenzdrehzahlen (Abregeldrehzahl) dauerhaft zugelassen, wodurch in Fällen mit Dauerdrehzahlen knapp unterhalb der Abregeldrehzahl thermische Schädigungen der Brennkraftmaschine auftreten können, wenn die zu hohen Drehzahlen nur lange genug vorliegen.

Erfindungsgemäß wird die Aufgabe jeweils durch die Gesamtheit der Merkmale der unabhängigen Ansprüche gelöst, während in den Unteransprüchen bevorzugte Weiterbildungen der Erfindung angegeben sind.
Die erfindungsgemäße Vorrichtung umfasst Mittel zur Überwachung und Begrenzung der Brennkraftmaschinendrehzahl, die derart ausgebildet sind, dass ab einer vorbestimmten ersten Drehzahlschwelle eine Integralbildung der vorliegenden Drehzahlwerte über der Zeit (bzw. eine hiermit korrelierende Summation von Werten) erfolgt. Bei Erreichen eines vorbestimmten Integralgrenzwertes erfolgt gemäß der Erfindung eine automatische Begrenzung der Drehzahl auf einen vorbestimmten reduzierten Drehzahlgrenzwert. Die vorbestimmte erste Drehzahlschwelle ist derart bemessen, dass sie deutlich oberhalb der Leerlaufdrehzahl und deutlich unterhalb der Abregeldrehzahl (die Abregel- bzw. Abschaltdrehzahl ist die zulässige Höchstdrehzahl, bei der der Motor zum Schutz gegen mechanische Schäden abgestellt bzw. abgeregelt wird - dies erfolgt i.d.R. durch Eingriffe in die Zündung und/oder die Kraftstoffzufuhr) der Brennkraftmaschine liegt. Der Drehzahlwert, auf den begrenzt wird sobald der vorbestimmte Integral-Grenzwert erreicht ist, ist derart gewählt, dass (durchschnittliche Rahmenbedingungen für Außentemperatur und dergleichen, vorausgesetzt) eine dauerhafter Betrieb der Brennkraftmaschine ohne thermische Schädigung der Brennkraftmaschine möglich ist. Der Drehzahlwert kann identisch der vorbestimmten ersten Drehzahlschwelle sein - er kann aber auch von dieser verschieden, insbesondere kleiner als diese bemessen sein.

Die vorbestimmte überwachte Drehzahlschwelle ist mit Vorteil variierbar ausgebildet und kann so auf unterschiedliche Rahmenbedingungen optimal eingestellt werden. Insbesondere ist die Drehzahlschwelle (für den Fall einer Drehzahlüberwachung während der Fahrt) in Abhängigkeit von der Fahrzeuggeschwindigkeit und/oder der eingelegten Gangstufe variierbar ausgebildet.

Erfindungsgemäß erfolgt eine Überwachung der vorbestimmten Drehzahlschwelle ausschließlich in dem Betriebszustand "Fahrzeugstillstand". Unter Fahrzeugstillstand wird im Sinne der Erfindung ein Betriebszustand verstanden, bei dem eine vorbestimmte Fahrzeuggeschwindigkeit nahe oder gleich null km/h vorliegt (z.B. v </= 1 km/h), und bei dem mit Vorteil der Kraftschluss zwischen der Brennkraftmaschine und den Antriebsrädern unterbrochen ist (z.B. betätigte Kupplung oder Leerlaufgangstufe eingelegt).

In einer besonders bevorzugten Ausführungsform ist der Drehzahlbereich oberhalb der überwachten Drehzahlschwelle in verschiedene Drehzahlbereiche unterteilt, wobei den unterschiedlichen Drehzahlbereichen unterschiedliche Wichtungen bzw. Wichtungsfaktoren (bzw. Integrier- bzw. Zählgeschwindigkeiten) zugeordnet sind, derart, dass höhere Drehzahlen einen stärkeren Anstieg des Integralwertes zur Folge haben als niedrigere Drehzahlen. Auf diese Weise wird die unterschiedliche Belastung der Brennkraftmaschine bei unterschiedlichen Drehzahlen oberhalb der überwachten Drehzahlschwelle berücksichtigt.

Analog zu der beschriebenen Vorrichtung wird ein erfindungsgemäßes Verfahren vorgeschlagen, bei dem die Überwachung der Drehzahl der Brennkraftmaschine auf eine vorbestimmte erste Drehzahlschwelle erfolgt, indem für die Zeitdauer der Überschreitung der ersten Drehzahlschwelle eine Integralbildung der vorliegenden Drehzahlwerte über der Zeit durchgeführt wird, und bei Erreichen eines vorbestimmten Integral-Grenzwertes eine automatische Begrenzung der Drehzahl auf einen vorbestimmten reduzierten Drehzahlgrenzwert erfolgt.

Ist der Integral-Grenzwert erreicht, wird die Drehzahl rampenartig auf den reduzierten Drehzahlgrenzwert abgeregelt, indem über eine vorbestimmte Zeitdauer die Drehzahl linear abfallend auf den vorgegebenen Wert reduziert wird. Mit Vorteil wird die vorbestimmte Zeitdauer in Abhängigkeit von vorgegebenen Betriebparametern variiert - z.B. in Abhängigkeit von dem Wert der im Zeitpunkt des Erreichens des vorbestimmten Integral-Grenzwertes vorliegenden Ist-Drehzahl.

Ferner wird ein im Fahrzeug befindlicher Fahrer spätestens mit Erreichen des vorbestimmten Integral-Grenzwertes durch Erzeugung eines Warnsignals über den Zustand des Integralwertes (und damit auch über den thermischen Zustand der Brennkraftmaschine) informiert. Alternativ kann mit Erreichen eines Integralwertes unterhalb des vorgegebenen Integral-Grenzwertes, ein für den Fahrer wahrnehmbares Warnsignal bereits vorzeitig generiert werden. Dies kann z.B. durch die Aktivierung einer Warnleuchte in der Instrumenteneinheit und/oder ein entsprechendes akustisches und/oder haptisches Warnsignal erfolgen.

In einer Weiterbildung der Erfindung kann das - durch Addition der Drehzahlwerte (bzw. Aktivierung eines Zählers) für die Zeitabschnitte, in denen die Brennkraftmaschine oberhalb der überwachten Drehzahlgrenze betrieben wird - anwachsende Integral (bzw. der anwachsende Zählerwert) bei Vorhandensein von bestimmten Betriebsbedingungen, die den in die Brennkraftmaschine eingebrachten Wärme- bzw. Energieeintrag reduzieren, gezielt verringert werden. Als den Wärmeeintrag reduzierende Betriebsbedingungen werden insbesondere ausgewertet:
- die durch Fahrtwind auftretende Kühlung bei Überschreiten einer vorbestimmten Mindestgeschwindigkeit (z.B. durch Überwachung der Fahrzeuggeschwindigkeit v; z.B. v >/= 50 km/h), und/oder
- die Zeitdauer für die die Brennkraftmaschine abgestellt (deaktiviert) ist, und/oder
- die Temperatur der Brennkraftmaschine.

Mit Vorteil sind weitere Betriebsbedingungen zur Dekrementierung des Integralwertes vorgesehen. Insbesondere wird aus Verfügbarkeitsgründen der Klemmen- bzw. Signalwechsel durch das Aus- und wieder Einschalten der Brennkraftmaschine (Überwachung Signalzustand an sog. "Klemme 15") überwacht und in Abhängigkeit hiervon eine vorbestimmte Reduzierung des Integralwertes vorgenommen. Dies hat den Vorteil, dass für den Fall, dass der Integral-Grenzwert erreicht wurde, durch einfaches Aus- und wieder Einschalten der Zündung, der Integral-Grenzwert um einen vorbestimmten Betrag reduziert wird und der Fahrer für den nachfolgenden Fahrzeugbetrieb nicht auf den reduzierten Drehzahlgrenzwert eingeschränkt ist, sondern das Fahrzeug (zumindest bis zum erneuten Erreichen des Integral-Grenzwertes) in herkömmlicher Weise unter Nutzung des normalen Drehzahlbereichs nutzen kann.

Ein Ausführungsbeispiel der Erfindung ist in der Zeichnung veranschaulicht und wird im Folgenden näher beschrieben. Es zeigen:
- Figur 1:: ein Diagramm, welches die Drehzahl der Brennkraftmaschine über der Zeit darstellt, und
- Figur 2:: ein mit dem Diagramm gemäß Figur 1 korrespondierendes Diagramm, welches die Integralbildung in Abhängigkeit von der vorliegenden Brennkraftmaschinendrehzahl darstellt.

Die beiden Diagramme zeigen das erfindungsgemäße Prinzip der von der Brennkraftmaschinendrehzahl n(t) abhängigen Inkrementierung eines Zählers Z und der hiervon abhängigen Begrenzung der Brennkraftmaschinendrehzahl auf einen reduzierten Drehzahlgrenzwert G mit Erreichen eines vorbestimmten maximal zulässigen Zählerwertes Zₘₐₓ (im Folgenden auch als Intergral-Grenzwert bezeichnet).

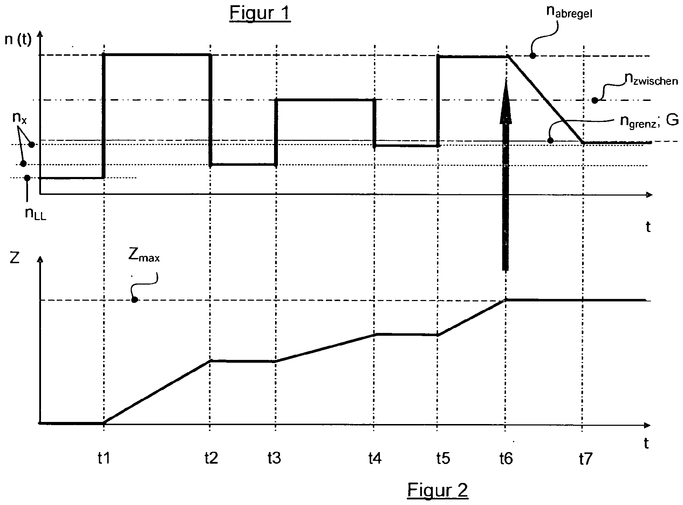

Ausgehend von einer Betriebsdrehzahl n mit einem momentanen Drehzahlwert gleich der Leerlaufdrehzahl n_{LL} erfolgt gemäß Figur 1 im Zeitpunkt t1 ein Drehzahlsprung bis auf die maximal zulässige Abregeldrehzahl n_{abregel}. Zeitgleich wird im Zeitpunkt t1 mit Überschreiten der vorbestimmten ersten Drehzahlschwelle n_{grenz} die Integralbildung der Drehzahlwerte, bzw. ein Zähler Z gestartet. Für die Zeitdauer, während der die vorbestimmte und überwachte Drehzahlschwelle n_{grenz} überschritten ist, zählt der Zähler Z mit einer vorbestimmten Zählergeschwindigkeit hoch. Im dargestellten Beispiel wird demnach bis zum Zeitpunkt t2, in welchem die aktuelle Drehzahl n die vorbestimmte Drehzahlschwelle n_{grenz} wieder unterschreitet, der Zähler Z linear mit vorgegebener Steigung (Geschwindigkeit) hoch gezählt. Mit Vorteil sind unterschiedlichen Drehzahlen n oberhalb der Drehzahlschwelle n_{grenz} unterschiedliche Zählgeschwindigkeiten (Steigungen) zugeordnet, so dass der Zähler Z für die Zeitdauer zwischen t1 und t2, während der die Brennkraftmaschine mit maximal zulässiger Drehzahl an der oberen Drehzahlgrenze n_{abregel} betrieben wird, mit einer vorgegebenen maximalen (der maximalen Drehzahl zugeordneten) Zählgeschwindigkeit hoch zählt. Ab t2, bis zum Zeitpunkt t3, nimmt die Drehzahl n einen Drehzahlzwischenwert nₓ unterhalb der überwachten Drehzahlschelle n_{grenz} ein, so dass bis zum Zeitpunkt t3, in dem erneut die überwachte Drehzahlschwelle n_{grenz} überschritten wird, der Zähler den Zählvorgang aussetzt. Im Zeitpunkt t3 wird der Zähler aufgrund des Überschreitens der Drehzahlschwelle n_{grenz} erneut gestartet. Der Zähler Z zählt, ausgehend von seinem im Zeitpunkt des letzen Unterschreitens der überwachten Drehzahlschwelle erreichten und abgespeicherten Zählerstand und in Abhängigkeit von der Höhe der aktuell vorliegenden Drehzahl n weiter hoch, solange wie die Drehzahlschwelle n_{grenz} überschritten ist. Da im Zeitbereich zwischen t3 und t4 die Brennkraftmaschine mit einer Drehzahl n_{zwischen} oberhalb der überwachten Drehzahlschwelle n_{grenz} und (deutlich) unterhalb der Maximaldrehzahl n_{abregel} betrieben wird, zählt der Zähler Z mit einer diesem Drehzahlbereich zugeordneten Zählgeschwindigkeit (die geringer ist, als die der maximalen Drehzahl zugeordnete Zählgeschwindigkeit) weiter hoch. Für eine sich anschließende Zeitdauer wird bis zum Zeitpunkt t5 die überwachte Drehzahlschwelle n_{grenz} (mit einer Zwischendrehzahl nₓ) unterschritten, so dass der Zähler Z wieder pausiert (bzw. den Zählvorgang aussetzt). Im Zeitpunkt t5 wird die überwachte Drehzahlschwelle n_{grenz} erneut überschritten, so dass der Zähler Z weiter hoch zählt. Da ab dem Zeitpunkt t5 die Brennkraftmaschine wieder mit der maximal zulässigen Drehzahl betrieben wird, zählt der Zähler Z wieder mit der, der Maximaldrehzahl zugeordneten, höchsten Zählgeschwindigkeit hoch. Im Zeitpunkt t6 wird die Brennkraftmaschine noch immer mit maximaler Drehzahl n_{abregel} betrieben. Zeitleich ist in diesem Zeitpunkt aber auch der vorbestimmte (maximal zulässige) Integral-Grenzwert bzw. der maximal zulässige Zählerwert Zₘₐₓ erreicht, so dass eine automatische Begrenzung der Brennkraftmaschinendrehzahl eingeleitet wird. Im Ausführungsbeispiel wird die Drehzahl n mit Erreichen des maximal zulässigen Integral-Grenzwertes Zₘₐₓ gemäß einer Rampenfunktion auf den im Zeitpunkt t7 erreichten vorbestimmten Drehzahlgrenzwert G herunter gefahren. Der vorbestimmte Drehzahlgrenzwert, auf den bei Erreichen des Integral-Grenzwertes Zₘₐₓ abgeregelt wird, kann (wie dargestellt) gleich der überwachten Drehzahlschwelle n_{grenz} sein - er kann aber auch einen anderen - insbesondere einen niedrigeren Wert als den der Drehzahlschwelle n_{grenz} - aufweisen.

Im vorstehend beschriebenen Ausführungsbeispiel wird in den Fällen, in denen die zu überwachende Drehzahlschwelle n_{grenz} unterschritten ist, der Integrations- bzw. Zählvorgang zur Bildung des Integralwertes ausgesetzt. Alternativ ist auch denkbar während dieser Zeitdauern eine Dekrementierung des Integralwertes vorzunehmen. Eine derartige Vorgehensweise erscheint insbesondere geeignet für Brennkraftmaschinen größerer Bauart mit niedrigeren Motorleistungen und verhältnismäßig geringen Wärmeeinträgen, da diese sich aufgrund der größeren Außenflächen (und/oder einer effizienteren Luftkühlung) auch schneller wieder abkühlen.

## Patentansprüche

1. Vorrichtung zur Steuerung einer Brennkraftmaschine eines Kraftfahrzeugs, umfassend:
- Mittel zur Überwachung und Begrenzung der Drehzahl (n) der Brennkraftmaschine, die derart ausgebildet sind,
-- dass ab einer vorbestimmten ersten Drehzahlschwelle (n_{grenz}) für die Zeitdauer der Überschreitung der Drehzahlschwelle (n_{grenz}) eine Integralbildung der Drehzahlwerte beziehungsweise eine Integralbildung von mit den Drehzahlwerten korrelierenden Werten über der Zeit erfolgt, und
-- dass bei Erreichen eines vorbestimmten Integral-Grenzwertes (Zₘₐₓ) eine automatische Begrenzung der Drehzahl (n) erfolgt, und
Mittel zur Überwachung des Fahrzeugzustands daraufhin, ob ein Fahrzeugstillstand vorliegt, wobei die Mittel zur Überwachung der Drehzahl (n) derart ausgebildet sind,
-- dass die Überwachung der Drehzahl (n) nur während des Fahrzeugstillstands erfolgt.

2. Vorrichtung nach Anspruch 1,
**dadurch gekennzeichnet, dass** die Drehzahlschwelle (n_{grenz}) betragsmäßig größer bemessen ist als die Leerlaufdrehzahl (n_{LL}) der Brennkraftmaschine.

3. Vorrichtung nach Anspruch 1 oder 2,
**dadurch gekennzeichnet, dass** die Drehzahlschwelle (n_{grenz}) betragsmäßig kleiner bemessen ist als die Abregeldrehzahl (n_{abregel}) der Brennkraftmaschine.

4. Vorrichtung nach einem der vorstehenden Ansprüche,
**dadurch gekennzeichnet, dass** die Drehzahlschwelle (n_{grenz}) variierbar ausgebildet ist.

5. Vorrichtung nach Anspruch 4,
**dadurch gekennzeichnet, dass** die Drehzahlschwelle (n_{grenz}) in Abhängigkeit von der Fahrzeuggeschwindigkeit und/oder der Gangstufe variierbar ist.

6. Vorrichtung nach einem der vorstehenden Ansprüche,
**dadurch gekennzeichnet, dass**
- unterschiedliche Drehzahlbereiche oberhalb der Drehzahlschwelle (n_{grenz}) unterschiedlich gewichtet sind, derart, dass höhere Drehzahlen (n) einen stärkeren Anstieg des Integralwertes zur Folge haben als niedrigere Drehzahlen (n).

7. Verfahren zur Steuerung einer Brennkraftmaschine eines Kraftfahrzeugs mit folgenden Verfahrensschritten:
- Überwachung der Drehzahl (n) der Brennkraftmaschine auf eine vorbestimmte erste Drehzahlschwelle (ngrenz), wobei
-- für die Zeitdauer der Überschreitung der Drehzahlschwelle (n_{grenz}) eine Integralbildung der vorliegenden Drehzahlwerte beziehungsweise eine Integralbildung von mit den Drehzahlwerten korrelierenden Werten über der Zeit erfolgt, und
- Begrenzung der Drehzahl (n) auf einen vorbestimmten Drehzahlgrenzwert, derart, dass
-- bei Erreichen eines vorbestimmten Integral-Grenzwertes eine automatische Begrenzung der Drehzahl auf den vorbestimmten Drehzahlgrenzwert erfolgt,
wobei das Verfahren nur bei Vorliegen eines Fahrzeugstillstands mit unterbrochenem Kraftschluss zwischen Brennkraftmaschine und Antriebsrädern durchgeführt wird.

8. Verfahren nach Anspruch 7,
**dadurch gekennzeichnet, dass** der vorbestimmte Drehzahlgrenzwert in Form einer Rampe innerhalb einer vorbestimmten, vorzugsweise variierbaren Zeitdauer angefahren wird.

9. Verfahren nach einem der vorstehenden Ansprüche 7-8,
**dadurch gekennzeichnet, dass** mit Erreichen oder Überschreiten eines vorbestimmten Integralwertes, insbesondere eines Integralwertes der kleiner als der vorbestimmte Integral-Grenzwert (Zₘₐₓ) ist, ein für den Fahrer wahrnehmbares Warnsignal erzeugt wird.

10. Verfahren nach einem der vorstehenden Ansprüche 7-9,
**dadurch gekennzeichnet, dass** der aktuelle Integralwert um einen ersten vorbestimmten Wert dekrementiert wird, wenn ein Signalwechsel des Zündung-Ein/Aus-Signals erkannt wird.

11. Verfahren nach einem der Ansprüche 7-10,
**dadurch gekennzeichnet, dass** der aktuelle Integralwert in Abhängigkeit von einem mit der Temperatur der Brennkraftmaschine korrelierenden Betriebsparameter um einen zweiten vorbestimmten Wert dekrementiert wird.

12. Verfahren nach einem der Ansprüche 7-11,
**dadurch gekennzeichnet, dass** der aktuelle Integralwert um einen dritten vorbestimmten Wert dekrementiert wird, wenn das Überschreiten einer vorbestimmten Fahrzeuggeschwindigkeit erkannt wird.

13. Verfahren nach einem der vorstehenden Ansprüche 7-12,
**dadurch gekennzeichnet, dass** die überwachte Drehzahlschwelle (n_{grenz}) in Abhängigkeit von der eingelegten Gangstufe und/oder in Abhängigkeit von der Fahrzeuggeschwindigkeit variiert wird.

## Claims

1. A device for controlling an internal combustion engine of a motor vehicle, comprising:
- means for monitoring and limiting the rotational speed (n) of the internal combustion engine, which means are configured in such a way that
-- starting from a predetermined first rotational speed threshold (n_{grenz}), an integral of the rotational speed values or an integral of values correlating to the rotational speed values over time is formed for the period of time during which the rotational speed threshold (n_{grenz}) is exceeded, and
-- upon reaching a predetermined integral limit value (Zₘₐₓ), the rotational speed (n) is automatically limited, and comprising
- means for monitoring the vehicle state so as to determine whether the vehicle is stationary, wherein the means for monitoring the rotational speed (n) are configured in such a way that
-- the rotational speed (n) is monitored only when the vehicle is stationary.

2. A device according to claim 1,
**characterised in that** the rotational speed threshold (n_{grenz}) is dimensioned in terms of its amount so as to be greater than the idle speed (n_{LL}) of the internal combustion engine.

3. A device according to claim 1 or 2,
**characterised in that** the rotational speed threshold (n_{grenz}) is dimensioned in terms of its amount so as to be less than the cut-off speed (n_{abregel}) of the internal combustion engine.

4. A device according to any one of the preceding claims,
**characterised in that** the rotational speed threshold (n_{grenz}) can be varied.

5. A device according to claim 4,
**characterised in that** the rotational speed threshold (n_{grenz}) can be varied depending on the vehicle speed and/or the gear.

6. A device according to any one of the preceding claims, **characterised in that**
- different rotational speed ranges above the rotational speed threshold (n_{grenz}) are weighted differently, in such a way that higher rotational speeds (n) have a steeper rise of the integral value than lower rotational speeds (n).

7. A method for controlling an internal combustion engine of a motor vehicle, comprising the following method steps:
- monitoring the rotational speed (n) of the internal combustion engine in relation to a predetermined first rotational speed threshold (n_{grenz}), wherein
-- for the period of time during which the rotational speed threshold (n_{grenz}) is exceeded, an integral of the present rotational speed values or an integral of values correlating to the rotational speed values over time is formed, and
- limiting the rotational speed (n) to a predetermined rotational speed limit value, in such a way that
-- upon reaching a predetermined integral limit value, the rotational speed is automatically limited to the predetermined rotational speed limit value,
wherein the method is performed only when the vehicle is stationary, with interrupted frictional connection between the internal combustion engine and drive wheels.

8. A method according to claim 7,
**characterised in that** the predetermined rotational speed limit value is approached in the form of a ramp within a predetermined, preferably variable period of time.

9. A method according to either one of preceding claims 7 or 8,
**characterised in that** upon reaching or exceeding a predetermined integral value, more especially an integral value that is less than the predetermined integral limit value (Zₘₐₓ), a warning signal which can be perceived by the driver is generated.

10. A method according to any one of preceding claims 7 to 9,
**characterised in that** the current integral value is decremented by a first predetermined value when a signal change of the ignition on/off signal is identified.

11. A method according to any one of claims 7 to 10,
**characterised in that** the current integral value is decremented by a second predetermined value depending on an operating parameter correlating to the temperature of the internal combustion engine.

12. A method according to any one of claims 7 to 11,
**characterised in that** the current integral value is decremented by a third predetermined value when it is identified that a predetermined vehicle speed has been exceeded.

13. A method according to any one of preceding claims 7 to 12,
**characterised in that** the monitored rotational speed threshold (n_{grenz}) is varied depending on the engaged gear and/or depending on the vehicle speed.

## Revendications

1. Dispositif de commande du moteur à combustion interne d'un véhicule comprenant :
- des moyens permettant de surveiller et de limiter la vitesse de rotation (n) du moteur à combustion interne qui sont réalisés de sorte
• qu'à partir d'un premier seuil de vitesse de rotation prédéfini (n_{grenz}) on effectue pour la durée du dépassement du seuil de la vitesse de rotation (n_{grenz}) la formation de l'intégrale en fonction du temps de la valeur de la vitesse de rotation ou de valeurs en relation avec les valeurs de la vitesse de rotation, et
• que lorsque l'on a atteint une valeur limite prédéfinie (Zₘₐₓ) de l'intégrale on effectue une limitation automatique de la vitesse de rotation (n), et
- des moyens permettant de surveiller l'état du véhicule pour déterminer si celui-ci est à l'arrêt, les moyens permettant de surveiller la vitesse de rotation (n) étant réalisés de sorte que la surveillance de la vitesse de rotation (n) ne soit effectuée que lorsque le véhicule est à l'arrêt.

2. Dispositif conforme à la revendication 1,
**caractérisé en ce que**
la valeur du seuil de vitesse de rotation (n_{grenz}) est supérieure à la vitesse de rotation au ralenti (n_{LL}) du moteur à combustion interne.

3. Dispositif conforme à la revendication 1 ou 2,
**caractérisé en ce que**
la valeur du seuil de la vitesse de rotation (n_{grenz}) est inférieur à la vitesse de coupure (n_{abregel}) du moteur à combustion interne.

4. Dispositif conforme à l'une des revendications précédentes,
**caractérisé en ce que**
la valeur du seuil de la vitesse de rotation (n_{grenz}) est variable.

5. Dispositif conforme à la revendication 4,
**caractérisé en ce que**
la valeur du seuil de la vitesse de rotation (n_{grenz}) varie en fonction de la vitesse du véhicule et/ou du rapport de vitesse.

6. Dispositif conforme à l'une des revendications précédentes,
**caractérisé en ce que**
différentes plages de vitesse de rotation supérieures à la valeur du seuil de la vitesse de rotation (n_{grenz}) sont pondérées différemment de sorte que des vitesses de rotation (n) plus élevées entraînent une augmentation plus forte de la valeur de l'intégrale que des valeurs plus faibles de la vitesse de rotation (n).

7. Procédé de commande du moteur à combustion interne d'un véhicule comprenant les étapes suivantes consistant à :
- surveiller la vitesse de rotation (n) du moteur à combustion interne par rapport à un premier seuil prédéfini de la vitesse de rotation (ngrenz),
- pendant la durée du dépassement du seuil de la vitesse de rotation (ngrenz), effectuer la formation de l'intégrale en fonction du temps de la valeur de la vitesse de rotation présente ou de valeurs en relation avec les valeurs de la vitesse de rotation, et
- limiter la vitesse de rotation (n) à une valeur limite prédéfinie de sorte que :
- lorsque l'on a atteint une valeur limite prédéfinie de l'intégrale, une limitation automatique de la vitesse de rotation a la valeur limite de la vitesse de rotation prédéfinie soit effectuée,
- le procédé n'étant mis en oeuvre que lorsque le véhicule est à l'arrêt la liaison mécanique entre le moteur et les roues motrices étant interrompue.

8. Procédé conforme à la revendication 7,
**caractérisé en ce que**
la valeur limite prédéfinie de la vitesse de rotation est mise en route sous la forme d'une rampe pendant une durée prédéfinie de préférence variable.

9. Procédé conforme à l'une des revendications précédentes 7 et 8,
**caractérisé en ce que**
lorsque l'on a atteint ou dépassé une valeur prédéfinie de l'intégrale, en particulier une valeur de l'intégrale qui est inférieure à la valeur limite prédéfinie de l'intégrale (Zₘₐₓ), un signal d'alarme perceptible par le conducteur est émis.

10. Procédé conforme à l'une des revendications précédentes 7 à 9,
**caractérisé en ce que**
la valeur actuelle de l'intégrale est décrémentée d'une première valeur prédéfinie lorsqu'un changement de signal du signal de branchement ou de coupure de l'allumage est identifié.

11. Procédé conforme à l'une des revendications 7 à 10,
**caractérisé en ce que**
la valeur actuelle de l'intégrale est décrémentée d'une seconde valeur prédéfinie en fonction d'un paramètre de fonctionnement lié à la température du moteur à combustion interne.

12. Procédé conforme à l'une des revendications 7 à 11,
**caractérisé en ce que**
la valeur actuelle de l'intégrale est décrémentée d'une troisième valeur prédéfinie lorsque le dépassement d'une vitesse prédéfinie du véhicule est identifié.

13. Procédé conforme à l'une des revendications 7 à 12,
**caractérisé en ce que**
le seuil de la vitesse de rotation surveillé (n_{grenz}) varie en fonction du rapport de vitesse passé et/ou en fonction de la vitesse du véhicule.
